# FASCICULE DE BREVET EUROPEEN

(11) **EP 3 517 361 B1**
(45) Date de publication et mention de la délivrance du brevet: **09.09.2020**
(21) Numéro de dépôt: 18214743.9
(22) Date de dépôt: 20.12.2018
(51) Int. Cl.: B60P 3/34, B60P 3/39

(54) **VÉHICULE DE LOISIRS COMPRENANT UNE SOUTE À BAGAGES RÉGLABLE EN VOLUME AU MOYEN D'UN COFFRE DE RANGEMENT**
FREIZEITFAHRZEUG, DAS EINEN GEPÄCKRAUM UMFASST, DESSEN VOLUMEN MITHILFE EINES VERSTAUUNGSKASTENS REGULIERT WERDEN KANN
RECREATIONAL VEHICLE COMPRISING A LUGGAGE HOLD ADJUSTABLE IN VOLUME BY MEANS OF A STORAGE BOX

(30) Priorité: 24.01.2018 FR 1850549
(43) Date de publication de la demande: 31.07.2019
(73) Titulaire: Trigano VDL, 75019 Paris (FR)
(72) Inventeur: CLEMENSON, M. Jérôme, 07290 ARDOIX (FR); PRAT, Isabelle, 26250 LIVRON (FR)
(74) Mandataire: Novagraaf Technologies

(56) Documents cités:
- EP-A1- 2 463 148
- DE-U1-202006 005 639
- DE-U1-202006 006 151
- DE-U1-202013 008 497

## Description

### DOMAINE TECHNIQUE

L'invention concerne le domaine des véhicules de loisirs, notamment des camping-cars. Plus précisément, l'invention concerne un véhicule de loisirs comprenant une soute à bagages réglable en volume au moyen d'un coffre de rangement.

### ETAT DE L'ART

Il est connu de munir des véhicules de loisirs, notamment les camping-cars, d'une soute à bagages réglable en volume.

Une telle soute à bagages permet de faire varier la capacité de la soute à bagages en fonction des besoins des utilisateurs du véhicule de loisirs. Les utilisateurs peuvent en effet augmenter la capacité de la soute à bagages, lorsqu'ils ont besoin de transporter des bagages volumineux ou bien même un vélo ou encore une motocyclette. Ils peuvent en revanche diminuer la capacité de la soute à bagages, lorsqu'ils ont à transporter des bagages moins volumineux.

Le document EP 3 181 399 A2 décrit un exemple de véhicule de loisirs comprenant une soute à bagages réglable en volume.

Ce véhicule de loisirs comprend un espace intérieur arrière délimité par une paroi arrière verticale du véhicule de loisirs. L'espace intérieur arrière comprend la soute à bagages et une zone d'habitacle située au-dessus de la soute à bagages, la soute à bagages et la zone d'habitacle étant séparées l'une de l'autre par un lit fixe par rapport à la paroi arrière du véhicule de loisirs. La soute à bagages comprend en outre un plancher réglable en hauteur par rapport à la paroi arrière du véhicule de loisirs, de sorte à faire varier le volume disponible dans la soute à bagages. Il est ainsi possible d'augmenter ou de diminuer la capacité de la soute à bagages en abaissant ou en élevant le plancher de la soute à bagages.

Autrement dit, cette solution impose d'abaisser le plancher de la soute à bagages en direction de la route pour augmenter la capacité de la soute à bagages, ce qui peut poser problème pendant le roulage du véhicule de loisirs, notamment pour le franchissement d'obstacles, tels qu'un dos d'âne.

Le document DE 20 2006 005 639 U1 décrit un autre exemple de véhicule de loisirs comprenant une soute à bagages réglable en volume.

Dans ce véhicule de loisirs, la soute à bagages de l'espace intérieur arrière est séparée de la zone d'habitacle par un lit horizontal réglable en hauteur par rapport à la paroi arrière du véhicule de loisirs.

Or, cette solution impose nécessairement que la zone d'habitacle située au-dessus de la soute à bagages soit une zone de couchage pour des utilisateurs du véhicule de loisirs. Cette solution n'offre donc que peu de possibilités pour aménager l'espace intérieur arrière du véhicule de loisirs.

Le document EP 2 463 148 A1 décrit un autre exemple de véhicule de loisirs comprenant une soute à bagages réglable en volume.

### PRESENTATION DE L'INVENTION

La présente invention vise à pallier les inconvénients mentionnés ci-dessus, notamment en proposant un véhicule de loisirs comprenant un espace intérieur arrière pourvu d'une soute à bagages et d'une zone d'habitacle séparées l'une de l'autre par un coffre de rangement réglable en hauteur, de sorte à faire varier un volume disponible dans la soute à bagages.

Plus précisément, l'invention a pour objet un véhicule de loisirs s'étendant d'arrière en avant suivant une direction longitudinale et de bas en haut suivant une direction verticale, comprenant :
- une paroi arrière verticale, et
- un espace intérieur arrière délimité par la paroi arrière et comprenant une soute à bagages et une zone d'habitacle agencée au-dessus de la soute à bagages, la soute à bagages et la zone d'habitacle étant séparées verticalement l'une de l'autre par un coffre de rangement,
- des moyens d'entraînement du coffre de rangement en translation verticale par rapport à la paroi arrière entre une position haute et une position basse, de sorte à faire varier un volume disponible à l'intérieur de la soute à bagages.

Selon différents modes de réalisation de l'invention, qui pourront être pris ensemble ou séparément :
- les moyens d'entraînement sont conçus pour bloquer le coffre de rangement en translation verticale dans toutes les positions intermédiaires situées entre les positions haute et basse ;
- les moyens d'entraînement comprennent :
   o un arbre d'entraînement qui est monté sur une paroi inférieure horizontale du coffre de rangement, à l'intérieur de la soute à bagages, pour tourner autour d'un axe de rotation, horizontal, dans un premier et dans un deuxième sens opposés de rotation,
   o une pluralité de sangles, câbles ou chaînes fixés par une première extrémité à l'arbre d'entraînement et par une deuxième extrémité à une ou des parois du véhicule de loisirs, de sorte à suspendre le coffre de rangement à la ou aux parois du véhicule de loisirs, lorsque le coffre de rangement est en position haute ou en position basse,
      les sangles, câbles ou chaînes s'enroulant ou se déroulant autour de l'arbre d'entraînement, respectivement lorsque l'arbre d'entraînement tourne autour de l'axe de rotation dans le premier sens de rotation ou dans le deuxième sens de rotation, de sorte à entraîner le coffre de rangement en translation verticale vers sa position haute ou vers sa position basse ;
- le véhicule de loisirs comprend des parois latérales verticales s'étendant perpendiculairement et de part et d'autre de la paroi arrière ;
- l'axe de rotation de l'arbre d'entraînement est orienté parallèlement aux parois latérales ;
- la deuxième extrémité des sangles, câbles ou chaînes est fixée aux parois latérales du véhicule de loisirs au niveau de zones de fixation situées au-dessus de bords inférieurs de la paroi inférieure du coffre de rangement, lorsque le coffre de rangement est dans la position basse et dans la position haute ;
- lesdits bords inférieurs de la paroi inférieure du coffre de rangement sont agencés en regard des parois latérales du véhicules de loisirs ;
- l'espace intérieur arrière comprend une plaque couvrante, verticale et perpendiculaire à la paroi arrière, rapportée et fixée sur chacune des zones de fixation des parois latérales du véhicule de loisirs ;
- le coffre de rangement comprend des parois latérales verticales s'étendant parallèlement aux parois latérales du véhicules de loisirs et de part et d'autre de la paroi inférieure du coffre de rangement ;
- un bord supérieur de chacune des parois latérales du coffre de rangement est situé plus haut ou à la même hauteur qu'un bord inférieur de la plaque couvrante adjacente, lorsque le coffre de rangement est en position basse ;
- ledit bord supérieur des parois latérales du coffre de rangement est horizontal ;
- ledit bord inférieur des plaques couvrantes est horizontal ;
- les parois latérales du coffre de rangement s'étendent verticalement, vers le haut, dans la zone d'habitacle, au-delà d'une paroi supérieure horizontale du coffre de rangement, opposée à la paroi inférieure ;
- une paroi supérieure du coffre de rangement comprend au moins une ouverture d'accès à un espace de rangement ;
- la paroi supérieure du coffre de rangement comprend au moins une trappe articulée sur la paroi supérieure ;
- une portion de la paroi supérieure du coffre de rangement porte une vasque simple ou double de lavage ;
- un matelas est posé sur une paroi supérieure du coffre de rangement ;
- le véhicule de loisirs comprend :
   o au moins un lit arrière horizontal agencé au-dessus du coffre de rangement et logé au moins en partie dans la zone d'habitacle,
   o des moyens d'entraînement du ou des lits arrière en translation verticale entre une position haute, dite position escamotée, et une position basse, dite position déployée, dans laquelle le ou les lits arrière sont au moins en partie en appui sur une paroi supérieure horizontale du coffre de rangement ;
- ledit au moins un lit arrière est un unique lit arrière présentant un axe d'extension longitudinal et qui est centré par rapport aux parois latérales du véhicule de loisirs (10) ;
- l'espace intérieur arrière comprend des moyens de guidage en translation verticale du coffre de rangement entre ses positions haute et basse et du ou de l'un des lits arrière entre ses positions escamotée et déployée ;
- les moyens de guidage comprennent au moins un ensemble de guidage comportant :
   ∘ un rail de guidage commun vertical monté sur le véhicule de loisirs,
   ∘ une paire de patins de guidage conçus pour coulisser ou rouler le long du rail de guidage commun, un premier patin de guidage, dit patin de guidage inférieur, étant porté par le coffre de rangement, un deuxième patin de guidage, dit patin de guidage supérieur, étant porté par le ou l'un des lits arrière ;
- le véhicule de loisirs comprend en outre un espace intérieur de vie séparé de l'espace intérieur arrière par une paroi de séparation, verticale et parallèle à la paroi arrière ;
- un bord supérieur de la paroi de séparation est situé plus bas ou à la même hauteur qu'une paroi supérieure horizontale du coffre de rangement, lorsque le coffre de rangement est en position basse ;
- un bord supérieur de la paroi de séparation est situé plus haut ou à la même hauteur qu'un bord inférieur d'une paroi avant, verticale, du coffre de rangement, lorsque le coffre de rangement est en position haute, la paroi avant étant agencée parallèlement et en regard de la paroi de séparation ;
- ledit bord supérieur de la paroi de séparation est horizontal ;
- ledit bord inférieur de la paroi avant du coffre de rangement est horizontal ;
- la paroi avant du coffre de rangement s'étend verticalement, vers le bas, dans la soute à bagages, au-delà d'une paroi inférieure horizontale du coffre de rangement.

### PRESENTATION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une vue en perspective, schématique, d'un véhicule de loisirs selon un mode de réalisation de l'invention ;
- la figure 2 est une vue en perspective d'un espace intérieur du véhicule de loisirs illustré à la figure 1, un coffre de rangement étant en position basse et un lit arrière étant en position haute ;
- la figure 3 est une vue en perspective de l'arrière de l'espace intérieur du véhicule de loisirs illustré à la figure 2 suivant une première orientation, le coffre de rangement étant en position basse et le lit arrière étant en position haute ;
- la figure 4 est une vue en perspective de l'arrière de l'espace intérieur du véhicule de loisirs illustré aux figures 2 et 3 suivant une deuxième orientation, le coffre de rangement étant en position basse et le lit arrière étant en position haute ;
- la figure 5 est une vue en perspective d'un détail de l'arrière de l'espace intérieur du véhicule de loisirs illustré aux figures 2 à 4 ;
- la figure 6a est une vue en perspective de l'arrière de l'espace intérieur du véhicule de loisirs illustré aux figures 2 à 5 suivant la première orientation, le coffre de rangement étant en position basse et le lit arrière étant en position haute ;
- la figure 6b est une vue en perspective de l'arrière de l'espace intérieur du véhicule de loisirs illustré aux figures 2 à 5 suivant la première orientation, le coffre de rangement étant en position basse et le lit arrière étant en position haute, des trappes d'accès au coffre de rangement étant en position d'ouverture ;
- la figure 6c est une vue en perspective de l'arrière de l'espace intérieur du véhicule de loisirs illustré aux figures 1 et 2 suivant la première orientation, le coffre de rangement étant en position basse et le lit arrière étant en position basse ;
- la figure 7a est une vue en perspective de l'arrière de l'espace intérieur du véhicule de loisirs illustré aux figures 2 à 5 suivant la première orientation, le coffre de rangement étant en position haute et le lit arrière étant en position haute ;
- la figure 7b est une vue en perspective de l'arrière de l'espace intérieur du véhicule de loisirs illustré aux figures 2 à 5 suivant la première orientation, le coffre de rangement étant en position haute et le lit arrière étant en position haute, des trappes d'accès au coffre de rangement étant en position d'ouverture ;
- la figure 7c est une vue en perspective de l'arrière de l'espace intérieur du véhicule de loisirs illustré aux figures 1 et 2 suivant la première orientation, le coffre de rangement étant en position haute et le lit arrière étant en position basse.

### DESCRIPTION DETAILLEE

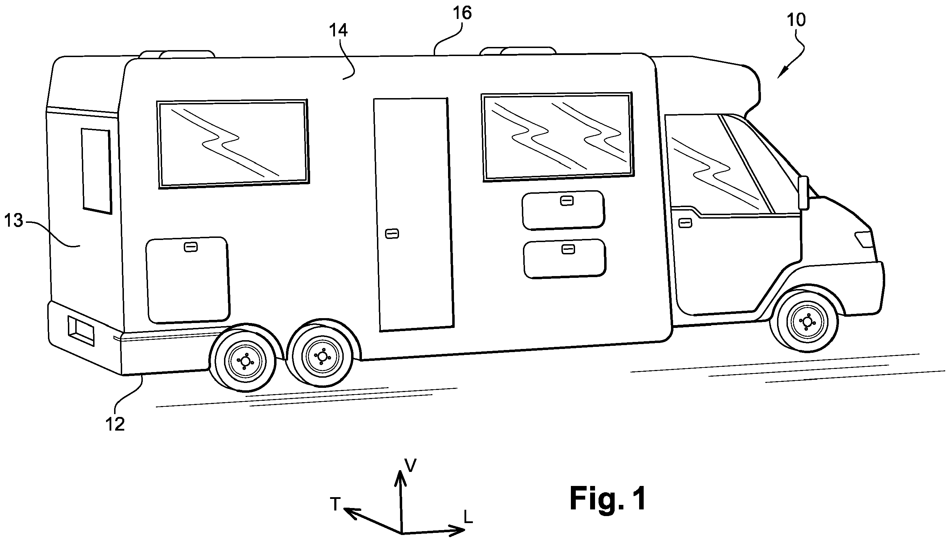

La figure 1 montre un véhicule de loisirs 10 selon un mode de réalisation de l'invention. Le véhicule de loisirs 10 est par exemple un camping-car, comme illustré à la figure 1. Le véhicule de loisirs 10 peut en variante être une caravane.

Le véhicule de loisirs 10 s'étend d'arrière en avant suivant une direction longitudinale L, de droite à gauche suivant une direction transversale T et de bas en haut suivant une direction verticale V.

Dans la suite de la description, les termes « longitudinal », « transversal » et « vertical » font respectivement référence aux orientations longitudinale L, transversale T et verticale V du véhicule de loisirs 10.

Le véhicule de loisirs 10 comprend par exemple un plancher avant 11 horizontal, un plancher arrière 12 horizontal, une paroi arrière 13 transversale s'étendant verticalement depuis le plancher arrière 12, et deux parois latérales 14, 15, longitudinales, s'étendant globalement verticalement depuis les planchers avant 11 et arrière 12, de part et d'autre de la paroi arrière 13 (figures 1, 3 et 4). Le véhicule de loisirs 10 peut encore comprendre un plafond 16 ou pavillon opposé aux planchers avant 11 et arrière 12 par rapport à la paroi transversale arrière 13 et aux parois latérales 14, 15.

Les planchers avant 11 et arrière 12, la paroi transversale arrière 13, les parois longitudinales 14, 15 et le cas échéant le plafond 16 définissent ensemble un espace intérieur du véhicule de loisirs 10.

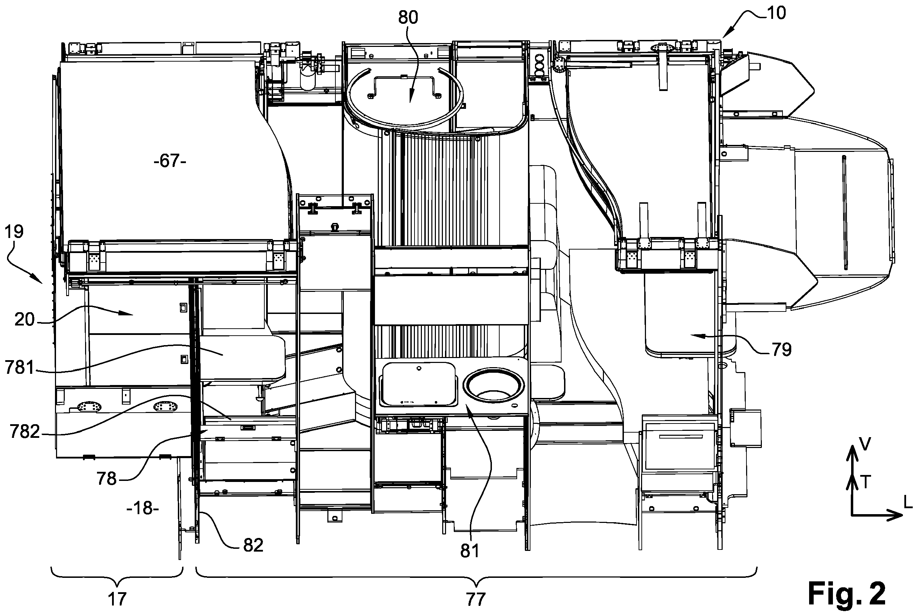

Le véhicule de loisirs 10 comprend en outre un espace intérieur arrière 17 délimité par la paroi arrière 13 (figures 2 à 4).

L'espace intérieur arrière 17 comprend une soute à bagages 18 et une zone d'habitacle 19 agencée au-dessus de la soute à bagages 18, la soute à bagages 18 et la zone d'habitacle 19 étant séparées l'une de l'autre suivant la direction verticale V par un coffre de rangement 20. Seul le coffre de rangement 20 sépare verticalement la soute à bagages 18 de la zone d'habitacle 19.

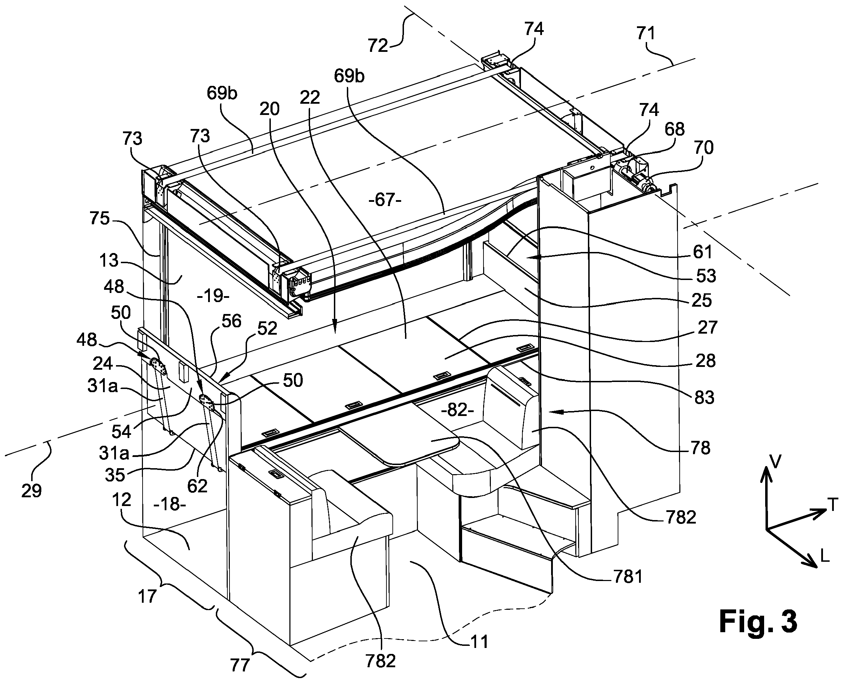

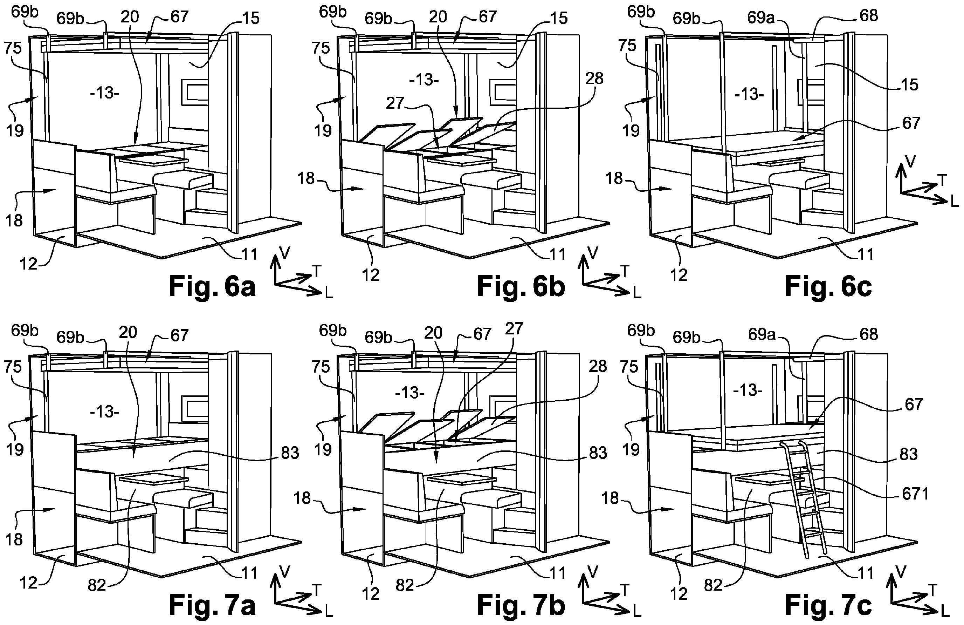

L'espace intérieur arrière 17 comprend en outre des moyens d'entraînement 30, 31a, 31b, 66 conçus pour entraîner le coffre de rangement 20 en translation verticale par rapport à la paroi arrière 13 entre une position haute (figures 7a à 7c) et une position basse (figures 3, 4 et 6a à 6c), de sorte à faire varier un volume disponible à l'intérieur de la soute à bagages 18 ou encore la capacité de la soute à bagages 18. Le coffre de rangement 20 est ainsi réglable en hauteur.

De cette manière, lorsque le coffre de rangement 20 est en position haute (figures 7a à 7c), la soute à bagages 18 offre la capacité la plus grande, la soute à bagages 18 pouvant alors accueillir des bagages volumineux ou encore un ou plusieurs vélos ou motocyclettes. Au contraire, lorsque le coffre de rangement 20 est en position basse (figures 3, 4 et 6a à 6c), la soute à bagages 18 offre la capacité la plus petite. Il est ainsi possible pour des utilisateurs d'opter pour une capacité plus ou moins grande dans la soute à bagages 18 en fonction de leur besoin, cette capacité pouvant en outre être modifiée autant que nécessaire lors de l'utilisation du véhicule de loisirs 10. La soute à bagages 18 est donc réglable en volume ou en capacité.

On comprendra par ailleurs que plus le volume disponible dans la soute à bagages 18 est grand, plus le volume libre dans la zone d'habitacle 19 est petit. Ainsi, en position haute du coffre de rangement 20 (figures 7a à 7c), la zone d'habitacle 19 offre le volume libre le plus petit, tandis qu'en position basse du coffre de rangement 20 (figures 3, 4 et 6a à 6c), la zone d'habitacle 19 offre le volume libre le plus grand.

En outre, la variation de volume disponible dans la soute à bagages 18 ou de capacité du soute à bagages 18 est réalisée par le coffre de rangement 20, ce qui autorise de plus nombreuses possibilités pour l'aménagement de l'espace intérieur arrière 17 et permet ainsi d'offrir aux utilisateurs du véhicule de loisirs 10 plus adapté à leurs besoins et à leur utilisation du véhicule de loisirs 10.

Comme cela sera détaillé dans la suite de description, il est par exemple possible d'installer, dans la zone d'habitacle 19, un ou plusieurs lits arrière 67 déplaçables verticalement entre une position haute, dite position escamotée (figures 3, 4, 6a, 6b, 7a et 7b), et une position basse (figures 6c et 7c), dite position déployée, dans laquelle le ou les lits arrière 67 reposent sur le coffre de rangement 20. Ainsi, le ou les lits arrière 67 peuvent être déplacés en position déployée la nuit, la zone d'habitacle 19 faisant alors office de zone de couchage, et en position rétractée le jour, libérant ainsi la zone d'habitacle 19 qui peut alors être utilisée autrement qu'en zone de couchage. En position rétractée du ou des lits arrière 67, les utilisateurs peuvent notamment entreposer des affaires dans le coffre de rangement 20 via la zone d'habitacle 19 ou encore sur le coffre de rangement 20. Il est aussi possible de n'installer aucun lit arrière dans la zone d'habitacle 19, mais d'y prévoir des rangements supplémentaires, la zone d'habitacle 19 faisant alors office de zone de rangement, et/ou du matériel électronique, tel qu'un téléviseur et/ou une chaîne hi-fi, la zone d'habitacle 19 faisant alors office de zone de loisirs.

Ce plus grand nombre de possibilités pour l'aménagement de l'espace intérieur arrière 17 autorise plus généralement plus de possibilités pour l'aménagement de l'espace intérieur du véhicule de loisirs 10, notamment de l'espace intérieur de vie 77 situé à l'avant de l'espace intérieur arrière 17 (figures 2 à 4). Comme cela sera détaillé dans la suite de la description, il est en effet possible d'installer une dinette 78 à l'arrière de l'espace intérieur de vie 77, la dinette 78 étant accolée à l'espace intérieur arrière 17 (figures 3, 4 et 6a à 7c). Par soucis de confort ou encore de facilité d'accès à la zone d'habitacle 19 pour les utilisateurs, cela ne serait par exemple pas possible avec une zone d'habitacle 19 ne faisant office que de zone de couchage.

Les moyens d'entraînement 30, 31 a, 31 b, 66 peuvent en outre être conçus pour bloquer le coffre de rangement 20 en translation verticale dans toutes les positions intermédiaires situées entre les positions haute et basse.

De cette manière, les positions pouvant être occupées par le coffre de rangement 20 ne sont pas limitées aux positions haute et basse. Les utilisateurs peuvent ainsi trouver le meilleur compromis entre le volume disponible nécessaire pour stocker leurs bagages dans la soute à bagages 18 et le volume libre suffisant pour assurer leur confort dans la zone d'habitacle 19.

Le coffre de rangement 20 présente par exemple une forme globalement parallélépipédique (figures 3, 4 et 5).

Le coffre de rangement 20 comprend une paroi inférieure 21 horizontale et une paroi supérieure 22 horizontale qui sont reliées l'une à l'autre par une paroi avant 23, transversale et verticale, et par deux parois latérales 24, 25, longitudinales et verticales.

La paroi avant 23 du coffre de rangement 20 peut s'étendre verticalement, vers le bas, au-delà de la paroi inférieure 21 du coffre de rangement 20. La paroi avant 23 fait ainsi saillie ou encore dépasse de la paroi inférieure 21 du coffre de rangement 20, dans la soute à bagages 18. En outre, un bord transversal inférieur 84 de la paroi avant 23 du coffre de rangement 20 est situé en dessous de la paroi inférieure 21 du coffre de rangement 20.

Les parois latérales 24, 25 du coffre de rangement 20 peuvent en outre s'étendre verticalement, vers le haut, au-delà de la paroi supérieure 22 du coffre de rangement 20. Les parois latérales 24, 25 du coffre de rangement 20 font ainsi saillie ou encore dépassent de la paroi supérieure 22 du coffre de rangement 20, dans la zone d'habitacle 19. En outre, des bords longitudinaux supérieurs 60, 61 des parois latérales 24, 25 du coffre de rangement 20 sont situés au-dessus de la paroi supérieure 22 du coffre de rangement 20.

Les parois inférieure 21 et supérieure 22 peuvent encore être reliées l'une à l'autre par une paroi arrière 26, transversale et verticale.

Les parois inférieure 21 et supérieure 22, la paroi avant 23, les deux parois latérales 24, 25 et le cas échéant la paroi arrière 26 du coffre de rangement 20 sont solidaires. Elles ne bougent pas entre elles.

Les parois inférieure 21 et supérieure 22, la paroi avant 23, les deux parois latérales 24, 25 et le cas échéant la paroi arrière 26 du coffre de rangement 20 définissent ensemble un espace de rangement (non illustré).

L'espace de rangement peut être compartimenté, par exemple au moyen d'une ou plusieurs cloisons verticales, longitudinales et/ou transversales (figures 6b et 7b), de sorte à faciliter le rangement par les utilisateurs de leurs effets personnels.

La paroi supérieure 22 du coffre de rangement 20 peut comprendre une ou plusieurs ouvertures d'accès 27 à l'espace de rangement.

La paroi supérieure 22 du coffre de rangement 20 peut en outre comprendre une ou plusieurs trappes 28 articulées sur la paroi supérieure 22 (figures 3, 4, 6b et 7b).

La trappe 28 ou chacune des trappes 28 est par exemple articulée entre une position de fermeture dans laquelle la trappe 28 ferme l'ouverture d'accès 27 qui lui est associée et empêche l'utilisateur d'accéder à l'espace de rangement (figures 6a et 7a) et une position d'ouverture dans laquelle la trappe 28 libère l'ouverture d'accès qui lui est associée et autorise les utilisateurs à accéder à l'espace de rangement (figures 6b et 7b).

Les utilisateurs peuvent ainsi avoir accès à l'espace de rangement, depuis la zone d'habitacle 19, que le coffre de rangement 20 soit en position haute ou en position basse.

La ou les trappes 28 du coffre de rangement 20 sont par exemple articulées autour d'un axe d'articulation 29 parallèle à la direction transversale T (figure 3).

La ou chacune des trappes 28 du coffre de rangement 20 peut encore comprendre un bord arrière transversal articulé sur la paroi supérieure 22 du coffre de rangement 20 autour de l'axe d'articulation 29 et un bord avant libre opposé. Le bord avant peut aussi être transversal. Ainsi, l'utilisateur peut avoir facilement accès à l'espace de rangement du coffre de rangement 20, depuis l'avant du véhicule de loisirs 10.

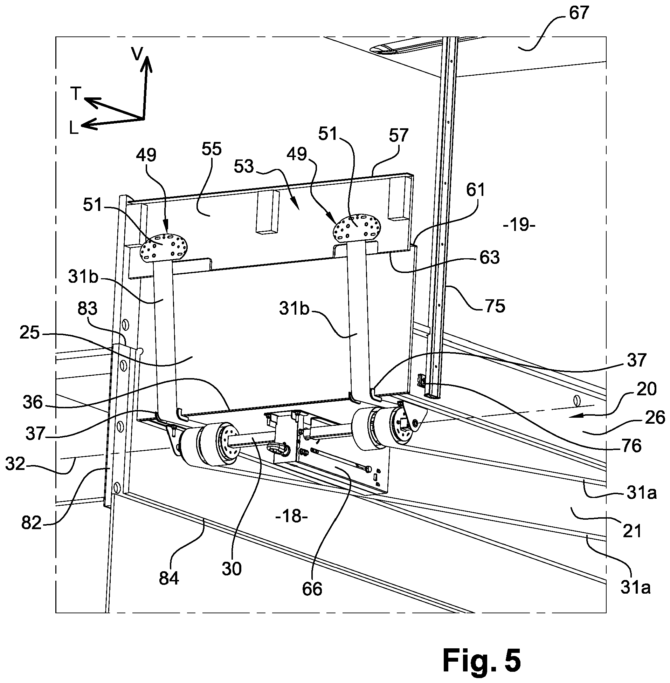

Les moyens d'entraînement 30, 31a, 31b, 66 comprennent par exemple un arbre d'entraînement 30 monté sur la paroi inférieure 21 du coffre de rangement 20, à l'intérieur de la soute à bagages 18, et conçu pour tourner autour d'un axe de rotation 32 horizontal, dans un premier et dans un deuxième sens opposés de rotation (figure 5). L'arbre d'entraînement 30 et son axe de rotation 32 sont orientés longitudinalement.

Le fait de positionner l'arbre d'entraînement 30 dans la soute à bagages 18 présente l'avantage de ne pas gêner l'aménagement de la zone d'habitacle 19.

L'arbre d'entraînement 30 est par exemple plus proche d'une des parois latérales 14, 15 du véhicule de loisirs 10 que de l'autre.

Les moyens d'entraînement 30, 31a, 31b, 66 peuvent aussi comprendre une pluralité de sangles 31a, 31b (figures 3 à 5). On entend par « sangle », une bande large et plate. Les sangles 31a, 31b sont par exemple réalisées en fibres plastiques, notamment en fibres de polyester, tissées. Ainsi, les sangles sont particulièrement légères.

En variante, les sangles 31a, 31b peuvent être remplacées par des câbles ou des chaînes. On entend par « câble », un cordage en fibres végétales, synthétiques ou en fils métalliques. On entend par « chaîne », une suite de maillons de métal ou de plastique, engagés les uns dans les autres ou articulés entre eux.

Les sangles 31a, 31b sont fixées par une première extrémité à l'arbre d'entraînement 30 et par une deuxième extrémité aux parois latérales 14, 15 du véhicule de loisirs 10 au niveau de zones de fixation situées au-dessus de bords longitudinaux inférieurs 35, 36 de la paroi inférieure 21 du coffre de rangement 20, lorsque le coffre de rangement 20 est dans la position basse et dans la position haute.

De cette manière, le coffre de rangement 20 est suspendu aux parois latérales 14, 15 du véhicule de loisirs 10 par l'intermédiaire des sangles 31a, 31b. On comprendra que le coffre de rangement 20 est suspendu aux parois latérales 14, 15 du véhicule de loisirs 10 à la fois lorsqu'il est dans les positions haute et basse et lorsqu'il se déplace en translation verticale par rapport à la paroi arrière 13 entre ses positions haute et basse.

Le coffre de rangement 20 est en outre en appui sur les sangles 31a, 31b, notamment au niveau des bords longitudinaux inférieurs 35, 36 du coffre de rangement 20 (figures 3 et 5), comme cela sera expliqué par la suite.

Par ailleurs, de cette manière, lorsque l'arbre d'entraînement 30 tourne autour de l'axe de rotation 32 dans le premier sens de rotation, les sangles 31a, 31b s'enroulent autour de l'arbre d'entraînement 30, de sorte à entraîner le coffre de rangement 20 en translation verticale vers la position haute. Au contraire, lorsque l'arbre d'entraînement 30 tourne autour de l'axe de rotation 32 dans le deuxième sens de rotation, les sangles 31a, 31b se déroulent de l'arbre d'entraînement 30, de sorte à entraîner le coffre de rangement 20 en translation verticale vers la position basse.

Ainsi, l'enroulement et le déroulement des sangles 31a, 31b autour de l'arbre d'entraînement 30 permettent de déplacer le coffre de rangement 20 en translation verticale par rapport à la paroi arrière 13 vers la position haute et vers la position basse.

Les sangles 31a, 31b sont par exemple fixées à l'arbre d'entraînement 30 à distance les unes des autres. Les sangles 31a, 31b sont donc réparties le long de l'arbre d'entraînement 30.

De cette manière, les sangles 31a, 31b s'enroulent et se déroulent simultanément autour de l'arbre d'entraînement 30 et ne risquent pas de se gêner mutuellement.

Chaque sangle 31a, 31b est orientée globalement transversalement depuis l'arbre d'entraînement 30 jusqu'à l'un des bords longitudinaux inférieurs 35, 36 du coffre de rangement 20 où le coffre de rangement 20 est en appui sur la sangle 31a, 31b, et est orientée globalement verticalement depuis le bord longitudinal inférieur 35, 36 jusqu'à l'une des zones de fixation des parois latérales 14, 15 du véhicule de loisirs 10 (figure 5).

Le coffre de rangement 20 peut en outre être pourvu d'une pluralité de pièces de guidage 37, chacune des pièces de guidage 37 étant conçue pour guider l'une des sangles 31a, 31b transversalement entre l'arbre d'entraînement 30 et le bord longitudinal inférieur 35, 36 du coffre de rangement 20 qui lui est associé et/ou verticalement entre ledit bord longitudinal inférieur 35, 36 et la zone de fixation des parois latérales 14, 15 du véhicule de loisirs 10 qui lui est associée (figure 5).

Pour cela, chacune des pièces de guidage 37 présente par exemple une forme d'équerre, complémentaire avec les bords longitudinaux inférieurs 35, 36 du coffre de rangement 20, et comprend deux ailes, verticales et transversales, définissant une rainure pour le guidage de la sangle 31a, 31b depuis l'arbre d'entraînement 30 vers la zone de fixation de la paroi latérale 14, 15 du véhicule de loisirs à laquelle elle est fixée. Les ailes empêchent la sangle 31a, 31b de se décaler longitudinalement.

Les moyens d'entraînement 30, 31a, 31b, 66 comprennent par exemple deux paires de sangles 31a, 31b, chaque paire de sangles 31a, 31b étant fixée d'une part à des extrémités opposées de l'arbre d'entraînement 30 et d'autre part à la zone de fixation de l'une des parois latérales 14, 15 du véhicule de loisirs 10.

De cette manière, le coffre de rangement 20 est suspendu par quatre sangles 31a, 31b, fixées deux par deux aux parois latérales 14, 15 opposées du véhicule de loisirs 10. Les sangles 31a, 31b permettent ainsi d'assurer le maintien horizontal du coffre de rangement 20, à la fois lorsque le coffre de rangement 20 est dans ses positions haute et basse et qu'il se déplace en translation verticale par rapport à la paroi arrière 13 du véhicule de loisirs 10 entre ses positions haute et basse.

La deuxième extrémité de chacune des sangles 31a, 31b est par exemple fixée à la zone de fixation de la paroi latérale 14, 15 du véhicule de loisirs 10 qui lui est associée au moyen d'une pièce de fixation 48, 49 (figures 3 à 5).

La pièce de fixation 48, 49 peut comprendre une paire de plaques (non représentées), longitudinales et verticales, entre lesquelles la deuxième extrémité de la sangle 31a, 31b est enserrée au moyen d'une pluralité d'assemblages boulonnés traversant les deux plaques, de part et d'autre de la deuxième extrémité des sangles 31a,31b.

La pièce de fixation 48, 49 peut en outre comprendre une plaque de protection 50, 51 parallèle à la paire de plaques et montée sur la zone de fixation de la paroi latérale 14, 15 du véhicule de loisirs par vissage, la paire de plaques étant elle-même montée sur la plaque de protection 50, 51 par l'intermédiaire des assemblages boulonnés.

De cette manière, l'effort de serrage de la sangle 31a, 31b est supporté par la paire de plaque et par la plaque de protection 50, 51 de la pièce de fixation 48, 49. Cela évite de déformer et de fragiliser la paroi latérale 14, 15 du véhicule de loisirs 10 pour serrer la sangle 31a, 31b.

L'espace intérieur arrière 17 peut en outre comprendre une plaque couvrante 52, 53, verticale et longitudinale, rapportée et fixée sur chacune des zones de fixation des parois latérales 14, 15 du véhicule de loisirs 10 (figures 3 à 5).

De cette manière, la deuxième extrémité des sangles 31a, 31b est agencée entre la zone de fixation de la paroi latérale 14, 15 du véhicule de loisirs 10 à laquelle elle est fixée et une surface 54, 55 de la plaque couvrante 52, 53 située en regard de la zone de fixation.

Les plaques couvrantes 52, 53 permettent ainsi de protéger les zones de fixation et d'éviter que la deuxième extrémité des sangles 31a, 31b fixée aux zones de fixation puisse être facilement manipulée par les utilisateurs, ce qui pourrait être dangereux.

Les plaques couvrantes 52, 53 peuvent en outre chacune comprendre un bord longitudinal supérieur 56, 57 présentant un rebord s'étendant horizontalement en direction de la paroi latérale 14, 15 adjacente du véhicule de loisirs 10 (figures 3 à 5). Les rebords permettent ainsi de bloquer l'accès par le haut aux zones de fixation au niveau desquelles les sangles 31a, 31b sont fixées aux parois latérales 14, 15 du véhicule de loisirs 10.

Chacune des parois latérales 24, 25 du coffre de rangement 20 comprend par exemple un bord longitudinal supérieur 60, 61 qui est situé plus haut ou encore qui est situé au-dessus d'un bord longitudinal inférieur 62, 63 de la plaque couvrante 52, 53 qui lui est adjacente (figures 3 à 5), lorsque le coffre de rangement 20 est en position basse.

De cette manière, lorsque le coffre de rangement 20 est en position basse, les parois latérales 24, 25 du coffre de rangement 20 recouvrent chacune, au moins en partie, la plaque couvrante 52, 53 adjacente.

Cela permet d'éviter qu'un utilisateur puisse se coincer les doigts, par cisaillement, entre le bord longitudinal supérieur 60, 61 des parois latérales 24, 25 du coffre de rangement 20 et le bord longitudinal inférieur 62, 63 de la plaque couvrante 52, 53 adjacente, lorsque le coffre de rangement 20 se déplace de la position basse à la position haute. Les zones de fixation sont en outre inaccessibles depuis la zone d'habitacle 19, ce qui est plus sûr pour les utilisateurs.

Par ailleurs, lorsque les parois latérales 24, 25 du coffre de rangement 20 s'étendent verticalement vers le haut au-delà de la paroi supérieure 22 du coffre de rangement 20, cela permet d'assurer le recouvrement des parois latérales 24, 25 du coffre de rangement 20 et de la plaque couvrante 52, 53 qui leur est adjacente en position basse du coffre de rangement 20, sans limiter l'amplitude du déplacement vertical du coffre de rangement 20 entre ses positions basse et haute.

En variante, le bord longitudinal supérieur 60, 61 de chacune des parois latérales 24, 25 du coffre de rangement 20 peut être situé à la même hauteur que le bord longitudinal inférieur 62, 63 de la plaque couvrante 52, 53 qui lui est adjacent, lorsque le coffre de rangement 20 est en position basse.

Chacune des parois latérales 24, 25 du coffre de rangement 20 est par exemple agencée transversalement à distance de la plaque couvrante 52, 53 qui lui est adjacente. De cette manière, chacune des parois latérales 24, 25 du coffre de rangement 20 est espacée de la plaque couvrante 52, 53 qui lui est adjacente.

Ainsi, le coffre de rangement 20 se déplace verticalement entre ses positions haute et basse sans que ses parois latérales 24, 25 frottent contre les plaques couvrantes 52, 53. Cela permet d'éviter d'user trop rapidement le coffre de rangement 20 et les plaques couvrantes 52, 53 par frottements répétés entre ces derniers.

Le bord longitudinal supérieur 60, 61 de chacune des parois latérales 24, 25 du coffre de rangement 20 peut en outre présenter un rebord s'étendant horizontalement en direction de la plaque couvrante 52, 53 adjacente. Les rebords permettent ainsi de bloquer l'accès par le haut à l'espace défini entre les parois latérales 24, 25 du coffre de rangement 20 et les plaques couvrantes 52, 53.

Les plaques couvrantes 52, 53 peuvent être remplacées par une bande de tissu ou encore un store.

Les moyens d'entraînement 30, 31a, 31b, 66 peuvent encore comprendre un moteur 66 manuel couplé avec l'arbre d'entraînement 30 autour de l'axe de rotation 32 (figure 5). Le moteur 66 entraîne l'arbre d'entraînement 30 en rotation autour de l'axe de rotation 32 dans les premier et deuxième sens de rotation.

Le moteur 66 est par exemple couplé avec une manivelle au moyen de laquelle le moteur 66 est actionné par les utilisateurs, de sorte à entraîner l'arbre d'entraînement 30 en rotation.

Le moteur 66 peut en outre comprendre des moyens de blocage pour bloquer l'arbre d'entraînement 30 en rotation et ainsi bloquer le coffre de rangement 20 en translation verticale dans la position haute ou dans la position basse ou encore, le cas échéant, dans une position intermédiaire.

En variante (non représentée), les moyens d'entraînement 30, 31a, 31b comprennent un moteur électrique couplé avec l'arbre d'entraînement 30 autour de l'axe de rotation 32. Le moteur électrique entraîne l'arbre d'entraînement 30 en rotation autour de l'axe de rotation 32 dans les premier et deuxième sens de rotation.

Le moteur électrique est par exemple intégré à un circuit électrique comprenant notamment un générateur électrique et un interrupteur actionnable par l'utilisateur et par l'intermédiaire duquel le générateur électrique est relié au moteur électrique.

L'interrupteur comprend par exemple trois positions, une première position autorisant le passage du courant électrique vers le moteur électrique afin de faire tourner l'arbre d'entraînement 30 dans le premier sens de rotation, une deuxième position interdisant le passage du courant vers le moteur électrique et une troisième position autorisant le passage du courant électrique vers le moteur électrique afin de faire tourner l'arbre d'entraînement 30 dans le deuxième sens de rotation. L'interrupteur permet ainsi de contrôler la montée et la descente du coffre de rangement 20 vers ses positions haute et basse.

L'interrupteur peut être installé dans l'espace intérieur du véhicule de loisirs 10, par exemple dans la soute à bagages 18 de l'espace intérieur arrière 17 afin d'autoriser un réglage de la capacité de la soute à bagages 18 pendant son chargement. L'interrupteur peut en variante être installé dans la zone d'habitacle 19 de l'espace intérieur arrière 17 ou encore dans l'espace intérieur de vie 77 du véhicule de loisirs 10 situé devant l'espace intérieur arrière 17. Deux interrupteurs peuvent encore être prévus, l'un installé dans la soute à bagages 18, l'autre installé dans la zone d'habitacle 19 de l'espace intérieur arrière 17 ou encore dans l'espace intérieur de vie 77 du véhicule de loisirs 10.

Le véhicule de loisirs 10 peut aussi comprendre au moins un lit arrière 67 horizontal agencé au-dessus du coffre de rangement 20 et logé au moins en partie dans la zone d'habitacle 19, ainsi que des moyens d'entraînement 68, 69a, 69b, 70 conçus pour entraîner le ou les lits arrière 67 en translation verticale par rapport à la paroi arrière 13 du véhicule de loisirs 10 entre une position haute, dite position escamotée (figures 2 à 4, 6a, 6b, 7a et 7b), et une position basse, dite position déployée (figures 6c et 7c), dans laquelle le ou les lits arrière 67 sont au moins en partie en appui sur la paroi supérieure 22 du coffre de rangement 20. Le coffre de rangement 20 sert ainsi de support au ou aux lits arrière 67 en position basse.

La position escamotée correspond à une position prévue pour la journée, les utilisateurs pouvant notamment accéder à l'espace de rangement à l'intérieur du coffre de rangement 20, via la zone d'habitacle 19 libérée du ou des lits arrière 67.

La position déployée correspond à une position prévue pour la nuit, les utilisateurs pouvant se coucher dans le ou les lits arrière 67 reposant sur le coffre de rangement 20, la zone d'habitacle 19 faisant alors office de zone de couchage.

De cette manière, l'espace intérieur arrière 17 permet non seulement d'avoir une soute à bagages 18 réglable en capacité, afin de s'adapter au volume des bagages à charger dans la soute à bagages 18, mais aussi un coffre de rangement 20 où les utilisateurs peuvent entreposer leurs affaires et une zone d'habitacle 19 modulable, permettant le couchage des utilisateurs la nuit mais pouvant être libérée du ou des lits arrière 67 le jour. L'espace intérieur arrière 17 est ainsi particulièrement adaptable en fonction des besoins des utilisateurs au cours de l'utilisation du véhicule de loisirs 10, améliorant ainsi le confort du véhicule de loisirs 10.

Une ou des échelles 671 démontables peuvent en outre être prévues pour accéder au ou aux lits arrière 67, lorsque le coffre de rangement 20 est en position haute et le ou les lits arrière 67 sont en position déployée (figure 7c).

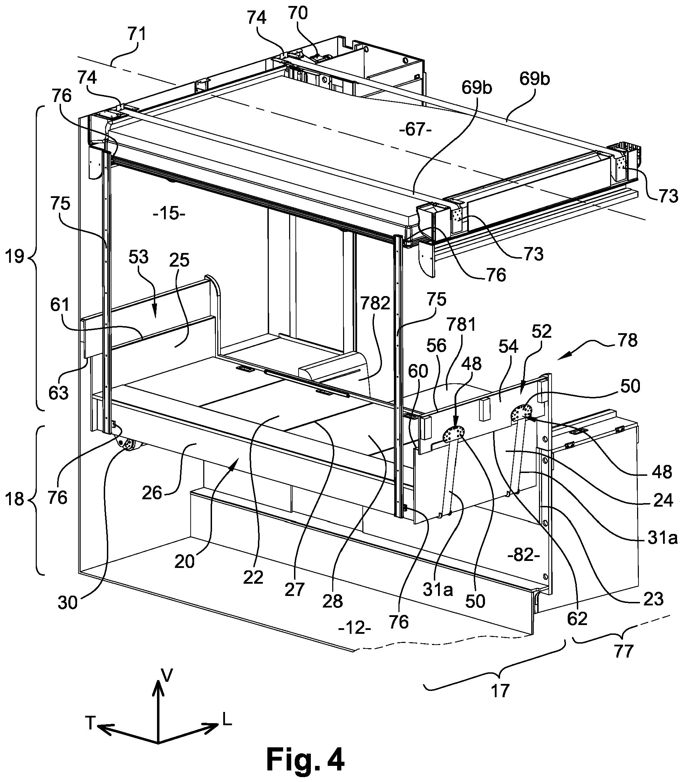

Comme illustré sur les figures, le véhicule de loisirs 10 comprend par exemple un unique lit arrière 67 présentant un axe d'extension 71 transversal (figures 3 et 4). Le lit arrière 67 est ainsi allongé suivant la direction transversale T, les bords transversaux du lit arrière 67 étant plus longs que ses bords longitudinaux. Le ou les utilisateurs s'allongent donc dans le lit arrière 67 suivant la direction transversale T du véhicule de loisirs 10.

Les moyens d'entraînement 68, 69a, 69b, 70 du lit arrière 67 comprennent par exemple un arbre d'entraînement 68 monté sur l'une 15 des parois latérales 14, 15 du véhicule de loisirs 10, au moins en partie dans la zone d'habitacle 19, et conçu pour tourner autour d'un axe de rotation 72 horizontal, dans un premier et dans un deuxième sens de rotation opposés (figure 3). L'arbre d'entraînement 68 du lit arrière 67 et son axe de rotation 72 sont orientés longitudinalement.

L'arbre d'entraînement 68 du lit arrière 67 et son axe de rotation 72 peuvent en outre être alignés verticalement avec le bord longitudinal du lit arrière 67 situé en regard de la paroi latérale 15 du véhicule de loisirs 10 accueillant l'arbre d'entraînement 68. L'arbre d'entraînement 68 du lit arrière 67 est ainsi agencé verticalement en regard d'un des bords longitudinaux du lit arrière 67.

Les moyens d'entraînement 68, 69a, 69b, 70 du lit arrière 67 comprennent encore une pluralité de sangles 69a, 69b fixées par une première extrémité à l'arbre d'entraînement 68 du lit arrière 67 et par une deuxième extrémité aux bords longitudinaux du lit arrière 67 (figures 3, 4, 6a à 6c et 7a à 7c).

De cette manière, le lit arrière 67 est suspendu à l'arbre d'entraînement 68 par l'intermédiaire des sangles 69a, 69b. On comprendra que le lit arrière 67 est suspendu à l'arbre d'entraînement 68 par l'intermédiaire des sangles 69a, 69b à la fois lorsqu'il est dans les positions escamotée et déployée et lorsqu'il se déplace en translation verticale entre ses positions escamotée et déployée.

Par ailleurs, de cette manière, lorsque l'arbre d'entraînement 68 tourne autour de l'axe de rotation 72 dans le premier sens de rotation, les sangles 69a, 69b s'enroulent autour de l'arbre d'entraînement 68, de sorte à entraîner un déplacement en translation verticale du lit arrière 67 vers sa position escamotée. Au contraire, lorsque l'arbre d'entraînement 68 tourne autour de l'axe de rotation 72 dans le deuxième sens de rotation, les sangles 69a, 69b se déroulent de l'arbre d'entraînement 68, de sorte à entraîner un déplacement en translation verticale du lit arrière 67 vers sa position déployée.

Les sangles 69a, 69b du lit arrière 67 sont par exemple réalisées en fibres plastiques, notamment en fibres de polyester, tissées. Ainsi, les sangles 69a, 69b sont particulièrement légères.

En variante, les sangles 69a, 69b du lit arrière 67 peuvent être remplacées par des câbles ou des chaînes.

Les sangles 69a, 69b du lit arrière 67 sont par exemple fixées à l'arbre d'entraînement 68 du lit arrière 67 à distance les unes des autres. Les sangles 69a, 69b sont donc réparties le long de l'arbre d'entraînement 68.

De cette manière, les sangles 69a, 69b du lit arrière 67 s'enroulent et se déroulent simultanément autour de l'arbre d'entraînement 68 et ne risquent pas de se gêner mutuellement.

Les moyens d'entraînement 68, 69a, 69b, 70 du lit arrière 67 comprennent par exemple deux paires de sangles 69a, 69b, chaque paire de sangles 69a, 69b étant fixée d'une part à des extrémités opposées de l'arbre d'entraînement 68 et d'autre part à des coins opposés de l'un des bords longitudinaux du lit arrière 67 (figures 3 et 4).

De cette manière, le lit arrière 67 est suspendu par quatre sangles 69a, 69b, fixées deux par deux aux bords longitudinaux opposés du lit arrière 67. Les sangles 69a, 69b permettent ainsi d'assurer le maintien horizontal du lit arrière 67, à la fois lorsque le lit arrière 67 est dans ses positions haute et basse et qu'il se déplace en translation verticale par rapport à la paroi arrière 13 du véhicule de loisirs 10 entre ses positions haute et basse.

Les moyens d'entraînement 68, 69a, 69b, 70 du lit arrière 67 peuvent encore comprendre un moteur électrique 70 couplé avec l'arbre d'entraînement 68 autour de l'axe de rotation 78 (figures 3 et 4). Le moteur électrique 70 entraîne l'arbre d'entraînement 68 du lit arrière 67 en rotation autour de l'axe de rotation 72 dans les premier et deuxième sens de rotation.

Le moteur électrique 70 du lit arrière 67 est par exemple intégré à un circuit électrique (non représenté) comprenant notamment un générateur électrique et un interrupteur actionnable par l'utilisateur et par l'intermédiaire duquel le générateur électrique est relié au moteur électrique 70.

L'interrupteur comprend par exemple trois positions, une première position autorisant le passage du courant électrique vers le moteur électrique 70 du lit arrière 67 afin de faire tourner l'arbre d'entraînement 68 dans le premier sens de rotation, une deuxième position interdisant le passage du courant vers le moteur électrique 70 et une troisième position autorisant le passage du courant électrique vers le moteur électrique 70 afin de faire tourner l'arbre d'entraînement 68 dans le deuxième sens de rotation. L'interrupteur permet ainsi de contrôler la montée et la descente du lit arrière 67 vers ses positions escamotée et déployée.

L'interrupteur peut être installé dans la zone d'habitacle 19 de l'espace intérieur arrière 17 ou encore dans l'espace intérieur habitable 34 du véhicule de loisirs 10 situé devant l'espace intérieur arrière 17.

En variante, les moyens d'entraînement 68, 69a, 69b du lit arrière 67 comprennent un moteur manuel couplé avec l'arbre d'entraînement 68 autour de l'axe de rotation 78, le moteur étant par exemple actionnable au moyen d'une manivelle.

Le véhicule de loisirs 10 peut encore comprendre des premières pièces de renvoi 73 chacune conçues pour renvoyer l'une des sangles d'une 69b des paires de sangles 69a, 69b provenant de l'arbre d'entraînement 68 du lit arrière 67, verticalement vers le bord longitudinal du lit arrière 67 opposé à l'arbre d'entraînement 68, les premières pièces de renvoi 73 étant situées au-dessus du lit arrière 67 (figures 3 et 4). Les premières pièces de renvoi 73 sont ainsi alignées verticalement avec le bord longitudinal du lit arrière 67 qui est opposé à l'arbre d'entraînement 68.

Les premières pièces de renvoi 73 sont par exemple montées sur le plafond 16 du véhicule de loisirs 10.

Les premières pièces de renvoi 73 comprennent par exemple chacune un boîtier monté sur le véhicule de loisirs 10, notamment sur le plafond 16 du véhicule de loisirs 10, et un pallier monté rotatif sur le boîtier autour d'un axe de rotation, parallèle à l'axe de rotation 72 de l'arbre d'entraînement 68 du lit arrière 67 et autour duquel la sangle 69b associée est enroulée.

Le véhicule de loisirs 10 peut aussi comprendre des deuxièmes pièces de renvoi 74 chacune conçues pour renvoyer l'une des sangles 69b provenant de l'arbre d'entraînement 68 du lit arrière 67 et enroulée autour d'une des premières pièces de renvoi 73, horizontalement vers la première pièce de renvoi 73 associée, les deuxièmes pièces de renvoi 74 étant situées au-dessus de l'arbre d'entraînement 68 du lit arrière 67 (figures 3 et 4).

Les deuxièmes pièces de renvoi 74 peuvent encore être conçues pour recevoir verticalement les sangles 69b provenant de l'arbre d'entraînement 68 du lit arrière 67 et enroulées autour d'une des premières pièces de renvoi 73. Les deuxièmes pièces de renvoi 74 sont ainsi alignées verticalement avec l'arbre d'entraînement 68 du lit arrière 67.

Les deuxièmes pièces de renvoi 74 sont par exemple montées sur le plafond 16 du véhicule de loisirs 10.

Les deuxièmes pièces de renvoi 74 comprennent par exemple chacune un boîtier monté sur le véhicule de loisirs 10, notamment sur le plafond 16 du véhicule de loisirs 10, et un pallier monté rotatif sur le boîtier autour d'un axe de rotation, parallèle à l'axe de rotation 72 de l'arbre d'entraînement 68 du lit arrière 67 et autour duquel la sangle 69b associée est enroulée.

L'espace intérieur arrière 17 comprend par exemple des moyens de guidage 75, 76 conçus pour guider en translation verticale le coffre de rangement 20 entre ses positions haute et basse et le lit arrière 67 entre ses positions escamotée et déployée (figures 3, 4, 5, 6a à 6c et 7a à 7c). Les moyens de guidage 75, 76 permettent de guider simultanément le coffre de rangement 20 et le lit arrière 67.

Les moyens de guidage 75, 76 permettent aussi de positionner et de maintenir le coffre de rangement 20 et le lit arrière 67 suivant les directions longitudinale X et transversale Y, voire même autour de la direction verticale Z.

Les moyens de guidage 75, 76 comprennent au moins un ensemble de guidage comportant un rail de guidage 75 commun, vertical, monté sur le véhicule de loisirs 10, ainsi qu'une paire de patins de guidage 76 conçus pour coopérer avec le rail de guidage 75, notamment pour glisser ou encore rouler le long du rail de guidage 75. Un premier patin de guidage 76, dit patin de guidage inférieur, est porté par le coffre de rangement 20, tandis qu'un deuxième patin de guidage 76, dit patin de guidage supérieur, est porté par le lit arrière 67.

De cette manière, les patins de guidage inférieur et supérieur 76, l'un porté par le coffre de rangement 20, l'autre porté par le lit arrière 67, coopèrent avec un rail de guidage 75 commun. Le guidage simultané en translation verticale du coffre de rangement 20 et du lit arrière 67 est ainsi assuré.

Le rail de guidage 75 de chaque ensemble de guidage est par exemple monté sur la paroi arrière 13 du véhicule de loisirs 10. Le patin de guidage inférieur 76 est ainsi porté par la paroi arrière 26 du coffre de rangement 20, tandis que le patin de guidage supérieur 76 est porté par le bord transversal du lit arrière 67 situé en regard de ou encore adjacent à la paroi arrière 13 du véhicule de loisirs 10.

De cette manière, les moyens de guidage 75, 76 et les moyens d'entraînement 30, 31a, 31b, 66 du coffre de rangement 20, notamment les sangles 31a, 31b, ne risquent pas de se gêner mutuellement.

En variante, le rail de guidage 75 de chaque ensemble de guidage est monté sur l'une des parois latérales 14, 15 du véhicule de loisirs 10. Le patin de guidage inférieur 76 est ainsi porté par la paroi latérale 24, 25 du coffre de rangement 20 adjacente à la paroi latérale 14, 15 du véhicule de loisirs 10 sur laquelle est monté le rail de guidage 75, tandis que le patin de guidage supérieur 76 est porté par le bord longitudinal du lit arrière 67 situé en regard de ou encore adjacent à ladite paroi latérale 14, 15 du véhicule de loisirs 10.

Les moyens de guidage 75, 76 comprennent par exemple deux ensembles de guidage espacés l'un de l'autre selon la direction transversale Y ou la direction longitudinale X, ici la direction transversale Y, et agencés à proximité des coins du lit arrière 67.

En variante, le coffre de rangement 20 et le lit arrière 67 sont guidés en translation verticale par l'intermédiaire de rails de guidage 75 séparés.

En variante (non représentée), le véhicule de loisirs 10 comprend un unique lit arrière présentant un axe d'extension longitudinal. Le lit arrière est ainsi allongé suivant la direction longitudinale L, les bords longitudinaux du lit arrière étant plus longs que ses bords transversaux. Le ou les utilisateurs s'allongent donc dans le lit arrière suivant la direction longitudinale L du véhicule de loisirs 10.

Le lit arrière est par exemple centré par rapport aux parois latérales 14, 15 du véhicule de loisirs 10. Le lit arrière peut en variante être décalé vers l'une des parois latérales 14, 15 du véhicule de loisirs 10.

La description des éléments communs et des variantes communes avec le mode de réalisation illustré de l'invention ne sera pas reprise ici. Seules les différences avec ce mode de réalisation seront détaillées ci-après.

L'arbre d'entraînement est par exemple monté sur la paroi arrière 13 du véhicule de loisirs 10, dans la zone d'habitacle 19, l'arbre d'entraînement du lit arrière et son axe de rotation étant orientés transversalement.

L'arbre d'entraînement du lit arrière et son axe de rotation sont par exemple alignés verticalement avec le bord transversal du lit arrière situé en regard de la paroi arrière 13 du véhicule de loisirs 10 accueillant l'arbre d'entraînement, l'arbre d'entraînement du lit arrière étant ainsi agencé verticalement en regard d'un des bords transversaux du lit arrière.

Les sangles sont fixées par une première extrémité à l'arbre d'entraînement du lit arrière et par une deuxième extrémité aux bords transversaux du lit arrière.

Les moyens d'entraînement du lit arrière comprennent par exemple quatre sangles. Chaque paire de sangles est fixée d'une part à des extrémités opposées de l'arbre d'entraînement du lit arrière et d'autre part à des coins opposés de l'un des bords transversaux du lit arrière, le lit arrière étant ainsi suspendu par quatre sangles, fixées deux par deux aux bords transversaux opposés du lit arrière.

Chacune des premières pièces de renvoi est conçue pour renvoyer l'une des sangles d'une des paires de sangles provenant de l'arbre d'entraînement du lit arrière, verticalement vers le bord transversal du lit arrière opposé à l'arbre d'entraînement, les premières pièces de renvoi étant situées au-dessus du lit arrière et ainsi alignées verticalement avec le bord transversal du lit arrière qui est opposé à l'arbre d'entraînement.

En variante, les moyens d'entraînement du lit arrière ne comprennent que trois sangles. Une paire de sangles est fixées d'une part à des extrémités opposées de l'arbre d'entraînement du lit arrière et d'autre part à des coins opposés du bord transversal du lit arrière agencé en regard de la paroi arrière 13 du véhicule de loisirs 10. La dernière sangle est fixée d'une part au niveau d'un zone centrale de l'arbre d'entraînement et d'autre part au niveau d'une zone centrale du bord transversal du lit arrière agencé à l'opposé de la paroi arrière 13 du véhicule de loisirs.

Lorsque les moyens d'entraînement du lit arrière comprennent trois sangles, le bord transversal du lit arrière, qui est agencé à l'opposé de la paroi arrière 13 du véhicule de loisirs 10, présente par exemple une forme arrondie vers l'extérieur du lit arrière, notamment en portion de cercle ou d'ellipse.

On comprendra que le véhicule de loisirs 10 ne comprend alors qu'une seule première pièce de renvoi et qu'une seule deuxième pièce de renvoi qui sont chacune associées à la dernière sangle.

Le rail de guidage commun de chaque ensemble de guidage des moyens de guidage est par exemple monté sur la paroi arrière 13 du véhicule de loisirs 10. Le patin de guidage inférieur des moyens de guidage est ainsi porté par la paroi arrière 26 du coffre de rangement 20, tandis que le patin de guidage supérieur des moyens de guidage est porté par le bord transversal du lit arrière adjacent à la paroi arrière 13 du véhicule de loisirs 10.

Lorsque le lit arrière est décalé vers l'une des parois latérales 14, 15 du véhicule de loisirs, le rail de guidage commun de chaque ensemble de guidage des moyens de guidage peut en variante être monté sur la paroi latérale 14, 15 du véhicule de loisirs 10 vers laquelle le lit arrière est décalé. Le patin de guidage inférieur des moyens de guidage est ainsi porté par la paroi latérale 24, 25 du coffre de rangement 20 adjacente à la paroi latérale 14, 15 du véhicule de loisirs 10 sur laquelle le rail de guidage commun est monté, tandis que le patin de guidage supérieur des moyens de guidage est porté par le bord longitudinal du lit arrière adjacent à ladite paroi latérale 14, 15 du véhicule de loisirs 10.

Lorsque le véhicule de loisirs 10 comprend un unique lit arrière présentant un axe d'extension longitudinal, le lit arrière ainsi allongé suivant la direction longitudinale (qui est par exemple décalé vers l'une des parois latérales 14 ou 15) comporte une partie « arrière » adjacente à la paroi arrière 13 du véhicule de loisirs 10 qui s'étend au-dessus d'une partie du coffre de rangement 20.

Ce lit arrière longitudinal est associé à des moyens d'entraînement conçus pour l'entraîner en translation verticale entre une position haute, dite position escamotée et une position basse, dite position déployée dans laquelle ce lit arrière est en partie en appui sur la paroi supérieure 22 du coffre 20 que la partie arrière de ce lit recouvre en position basse et à laquelle il donne accès lorsqu'il est en position haute.

La partie du coffre 20 située en-dessous de la partie longitudinale arrière du lit peut porter sur sa paroi ou face supérieure une vasque - simple ou double - en permettant ainsi, en position haute du coffre et du lit arrière de transformer la zone de couchage en une très grande salle d'eau ou salle de bains.

En variante la vasque peut être remplacée par une coiffeuse ou une zone de « dressing ».

Encore en variante (non représentée), le véhicule de loisirs 10 comprend des lits arrière jumeaux, les deux lits arrière présentant un axe d'extension longitudinal et s'étendant de part et d'autre d'un plan médian du véhicule de loisirs 10, longitudinal et vertical. Les lits arrière sont ainsi allongés suivant la direction longitudinale L, les bords longitudinaux des lits arrière étant plus longs que leurs bords transversaux. Les utilisateurs s'allongent donc dans chacun des lits arrière suivant la direction longitudinale L du véhicule de loisirs 10. Chacun des lits arrière est en outre décalé vers l'une des parois latérales 14, 15 du véhicule de loisirs 10.

La description des éléments communs et des variantes communes avec le mode de réalisation illustré de l'invention ne sera pas reprise ici. Seules les différences avec ce mode de réalisation seront détaillées ci-après.

Les moyens d'entraînement des lits arrière comprennent par exemple un arbre d'entraînement pour chacun des lits arrière, les deux arbres d'entraînement étant conçus pour tourner autour d'un axe de rotation horizontal commun, dans un premier et dans un deuxième sens de rotation opposés. Dans ce cas, les moyens d'entraînement, les premières et deuxièmes pièces de renvoi ainsi que les moyens de guidage pour chacun des lits arrière et leur intégration dans le véhicule de loisirs 10 sont identiques à ceux précédemment décrits pour un unique lit arrière longitudinal.

En variante, un arbre d'entraînement commun pour les deux lits arrière remplace les deux arbres d'entraînement, l'arbre d'entraînement commun étant conçu pour tourner autour de l'axe de rotation horizontal commun dans les premier et deuxième sens de rotation opposés.

Le véhicule de loisirs 10 peut encore comprendre un espace intérieur de vie 77 situé devant l'espace intérieur arrière 17 (figure 2 à 4).

L'espace intérieur de vie 77 comprend par exemple, ici, une première dinette 78 située à l'arrière, une deuxième dinette 79 située à l'avant, un bloc sanitaire 80 et un équipement de cuisine 81 situés l'un en face de l'autre entre les première et deuxième dinettes 78, 79. On entend par « dinette », un ensemble d'une table et d'une ou plusieurs banquettes.

L'espace intérieur de vie 77 est séparé de l'espace intérieur arrière 17 par une paroi de séparation 82, verticale et transversale (figures 3, 4 et 5).

La première dinette 78 comprend par exemple une tablette 781 montée coulissante suivant la direction transversale T sur la paroi de séparation 82. Deux banquettes 782 de la première dinette 78 peuvent en outre être accolées à la paroi de séparation 82, de part et d'autre de la tablette 781.

La paroi de séparation 82 comprend par exemple un bord transversal supérieur 83 qui est situé plus bas ou encore qui est situé en dessous de la paroi supérieure 22 du coffre de rangement 20, lorsque le coffre de rangement 20 est en position basse (figures 3). Cela permet de s'assurer que le ou les lits arrière 67 viennent en appui sur la paroi supérieure 22 du coffre de rangement 20, lorsque le ou les lits arrière 67 sont en position déployée.

En variante, le bord transversal supérieur 83 de la paroi de séparation 82 est situé à la même hauteur que la paroi supérieure 22 du coffre de rangement 20, lorsque le coffre de rangement 20 est en position basse.

Le bord transversal supérieur 83 de la paroi de séparation 82 est par exemple situé plus haut ou encore situé au-dessus d'un bord transversal inférieur 84 de la paroi avant 23 du coffre de rangement 20 (figures 5 et 7a à 7c), lorsque le coffre de rangement 20 est en position haute.

De cette manière, lorsque le coffre de rangement 20 est en position haute, la paroi avant 23 du coffre de rangement 20 est au moins en partie recouverte par la paroi de séparation 82.

Cela permet d'éviter qu'un utilisateur puisse se coincer les doigts, par cisaillement, entre le bord transversal inférieur 84 de la paroi avant 23 du coffre de rangement 20 et le bord transversal supérieur 83 de la paroi de séparation 82, lorsque le coffre de rangement 20 se déplace de la position haute à la position basse. La soute à bagages 18 est en outre inaccessible depuis la zone d'habitacle 19 ou l'espace intérieur de vie 77, ce qui est plus sûr pour les utilisateurs.

Par ailleurs, lorsque la paroi avant 23 du coffre de rangement 20 s'étend verticalement vers le bas au-delà de la paroi inférieure 21 du coffre de rangement 20, cela permet d'assurer le recouvrement de la paroi avant 23 du coffre de rangement 20 et de la paroi de séparation 82 en position haute du coffre de rangement 20, sans limiter l'amplitude du déplacement vertical du coffre de rangement 20 entre ses positions basse et haute.

En variante, le bord transversal supérieur 83 de la paroi de séparation 82 est situé à la même hauteur que le bord transversal inférieur 84 de la paroi avant 23 du coffre de rangement 20, lorsque le coffre de rangement 20 est en position haute.

Selon une variante non représentée, la paroi supérieure 22 du coffre de rangement 20 constitue une surface d'appui pour un matelas qui est posé sur celle-ci pour constituer un lit inférieur.

Ce lit inférieur peut être utilisé notamment lorsque le lit supérieur mobile 67.

On dispose alors d'un aménagement à coffre de rangement mobile et à deux lits ou couchages agencés dans la zone située au-dessus.

Pour accéder à l'espace de rangement du coffre de rangement, il est possible de faire pivoter le matelas posé sur la paroi supérieure 22 avec cette dernière, ou bien d'ôter temporairement le matelas posés sur celle-ci.

Dans les différents exemples et modes de réalisation de l'invention décrits ci-dessus, l'espace intérieur arrière 17 est totalement occupé par la soute à bagages 18, le coffre de rangement 20 et la zone d'habitacle 19.

L'espace intérieur arrière 17 peut toutefois n'être occupé qu'en partie par la soute à bagages 18, le coffre de rangement 20 et la zone d'habitacle 19, ces derniers étant alors accolés à l'une des parois latérales 14, 15 du véhicule de loisirs 10 et espacés de l'autre des parois latérales 15, 14 du véhicule de loisirs 10, libérant ainsi une partie de l'espace intérieur arrière 17.

Dans ce cas, les orientations longitudinale et transversale données ci-dessus peuvent rester inchangées, la soute à bagages 18, le coffre de rangement 20 et la zone d'habitacle 19 étant logées entre l'une des parois latérales 14, 15 du véhicule de loisirs 10 et une cloison, verticale et longitudinale, intercalée entre les deux parois latérales 14, 15 longitudinales du véhicule de loisirs 10. Les enseignements fournis ci-dessus sont ainsi applicables à la cloison qui remplace alors la paroi latérale 15, 14 de laquelle la soute à bagages 18, le coffre de rangement 20 et la zone d'habitacle 19 sont les plus éloignés.

Les orientations longitudinale et transversale données ci-dessus peuvent au contraire être interchangées, la paroi arrière 13 étant alors longitudinale et les parois latérales 14, 15 composées d'une paroi latérale transversale et d'une cloison transversale.

## Revendications

1. Véhicule de loisirs (10) s'étendant d'arrière en avant suivant une direction longitudinale (L) et de bas en haut suivant une direction verticale (V), comprenant :
- une paroi arrière (13) verticale, et
- un espace intérieur arrière (17) délimité par la paroi arrière (13) et comprenant une soute à bagages (18) et une zone d'habitacle (19) agencée au-dessus de la soute à bagages (18),
le véhicule de loisirs étant **caractérisé en ce que** la soute à bagages (18) et la zone d'habitacle (19) sont séparées verticalement l'une de l'autre par un coffre de rangement (20), et **en ce qu'**il comprend des moyens d'entraînement (30, 31a, 31b, 66) du coffre de rangement (20) en translation verticale par rapport à la paroi arrière (13) entre une position haute et une position basse, de sorte à faire varier un volume disponible à l'intérieur de la soute à bagages (18).

2. Véhicule de loisirs selon la revendication 1, dans lequel les moyens d'entraînement (30, 31a, 31b, 66) comprennent :
- un arbre d'entraînement (30) qui est monté sur une paroi inférieure (21) horizontale du coffre de rangement (20), à l'intérieur de la soute à bagages (18), pour tourner autour d'un axe de rotation (32), horizontal, dans un premier et dans un deuxième sens opposés de rotation,
- une pluralité de sangles (31a, 31b), câbles ou chaînes fixés par une première extrémité à l'arbre d'entraînement (30) et par une deuxième extrémité à une ou des parois (14, 15) du véhicule de loisirs (10), de sorte à suspendre le coffre de rangement (20) à la ou aux parois (14, 15) du véhicule de loisirs (10), lorsque le coffre de rangement (20) est en position haute ou en position basse,
les sangles (31a, 31b), câbles ou chaînes s'enroulant ou se déroulant autour de l'arbre d'entraînement (30), respectivement lorsque l'arbre d'entraînement (30) tourne autour de l'axe de rotation (32) dans le premier sens de rotation ou dans le deuxième sens de rotation, de sorte à entraîner le coffre de rangement (20) en translation verticale vers sa position haute ou vers sa position basse.

3. Véhicule de loisirs selon la revendication 2, comprenant des parois latérales (13, 14) verticales s'étendant perpendiculairement et de part et d'autre de la paroi arrière (13), et dans lequel :
- l'axe de rotation (32) de l'arbre d'entraînement (30) est orienté parallèlement aux parois latérales (13, 14),
- la deuxième extrémité des sangles (31a, 31b), câbles ou chaînes est fixée aux parois latérales (14, 15) du véhicule de loisirs (10) au niveau de zones de fixation situées au-dessus de bords inférieurs (35, 36) de la paroi inférieure (21) du coffre de rangement (20), lorsque le coffre de rangement (20) est dans la position basse et dans la position haute.

4. Véhicule de loisirs (10) selon la revendication 3, dans lequel l'espace intérieur arrière (17) comprend une plaque couvrante (52, 53), verticale et perpendiculaire à la paroi arrière (13), rapportée et fixée sur chacune des zones de fixation des parois latérales (14, 15) du véhicule de loisirs (10).

5. Véhicule de loisirs (10) selon la revendication 4, dans lequel le coffre de rangement (20) comprend des parois latérales (24, 25) verticales s'étendant parallèlement aux parois latérales (14, 15) du véhicule de loisirs (10) et de part et d'autre de la paroi inférieure (21) du coffre de rangement (20), un bord supérieur (60, 61) de chacune des parois latérales (24, 25) du coffre de rangement (20) étant situé plus haut ou à la même hauteur qu'un bord inférieur (62, 63) de la plaque couvrante (52, 53) adjacente, lorsque le coffre de rangement (20) est en position basse.

6. Véhicule de loisirs selon la revendication 5, dans lequel les parois latérales (24, 25) du coffre de rangement (20) s'étendent verticalement, vers le haut, dans la zone d'habitacle (19), au-delà d'une paroi supérieure (22) horizontale du coffre de rangement (20), opposée à la paroi inférieure (21).

7. Véhicule de loisirs selon l'une quelconque des revendications précédentes, dans lequel une paroi supérieure (22) du coffre de rangement (20) comprend au moins une ouverture d'accès (27) à un espace de rangement.

8. Véhicule de loisirs selon la revendication 7, dans lequel la paroi supérieure (22) du coffre de rangement (20) comprend au moins une trappe (28) articulée sur la paroi supérieure 22).

9. Véhicule de loisirs selon l'une quelconque des revendications précédentes, dans lequel une portion de la paroi supérieure du coffre de rangement (20) porte une vasque simple ou double de lavage.

10. Véhicule de loisirs selon l'une quelconque des revendications précédentes, dans lequel un matelas est posé sur une paroi supérieure (22) du coffre de rangement (20).

11. Véhicule de loisirs selon l'une des revendications 1 à 10, comprenant :
- au moins un lit arrière (67) horizontal agencé au-dessus du coffre de rangement (20) et logé au moins en partie dans la zone d'habitacle (19),
- des moyens d'entraînement (68, 69a, 69b, 70) du ou des lits arrière (67) en translation verticale entre une position haute, dite position escamotée, et une position basse, dite position déployée, dans laquelle le ou les lits arrière (67) sont au moins en partie en appui sur une paroi supérieure (22) horizontale du coffre de rangement (20).

12. Véhicule selon la revendication 11 prise en combinaison avec la revendication 3, **caractérisé en ce que** ledit au moins un lit arrière (67) est un unique lit arrière présentant un axe d'extension longitudinal et qui est centré par rapport aux parois latérales (14, 15) du véhicule de loisirs (10).

13. Véhicule de loisirs selon la revendication 11, dans lequel l'espace intérieur arrière (17) comprend des moyens de guidage (75, 76) en translation verticale du coffre de rangement (20) entre ses positions haute et basse et du ou de l'un des lits arrière (67) entre ses positions escamotée et déployée.

14. Véhicule de loisirs (10) selon la revendication 13, dans lequel les moyens de guidage (75, 76) comprennent au moins un ensemble de guidage comportant :
- un rail de guidage (75) commun vertical monté sur le véhicule de loisirs (10),
- une paire de patins de guidage (76) conçus pour coulisser ou rouler le long du rail de guidage (75) commun, un premier patin de guidage (76), dit patin de guidage inférieur, étant porté par le coffre de rangement (20), un deuxième patin de guidage (76), dit patin de guidage supérieur, étant porté par le ou l'un des lits arrière (67).

15. Véhicule de loisirs selon l'une des revendications 1 à 14, comprenant en outre un espace intérieur de vie (77) séparé de l'espace intérieur arrière (17) par une paroi de séparation (82), verticale et parallèle à la paroi arrière (13), un bord supérieur (83) de la paroi de séparation (82) étant situé plus haut ou à la même hauteur qu'un bord inférieur (84) d'une paroi avant (23), verticale, du coffre de rangement (20), lorsque le coffre de rangement (20) est en position haute, la paroi avant (23) étant agencée parallèlement et en regard de la paroi de séparation (82).

16. Véhicule de loisirs selon la revendication 15, dans lequel la paroi avant (23) du coffre de rangement (20) s'étend verticalement, vers le bas, dans la soute à bagages (18), au-delà d'une paroi inférieure (21) horizontale du coffre de rangement (20).

## Patentansprüche

1. Freizeitfahrzeug (10), das sich von hinten nach vorn in einer Längsrichtung (L) und von unten nach oben in einer vertikalen Richtung (V) erstreckt, umfassend:
- eine vertikale Rückwand (13) und
- einen hinteren Innenraum (17), der durch die Rückwand (13) begrenzt ist und einen Gepäckraum (18) und einen über dem Gepäckraum (18) angeordneten Fahrgastraumbereich (19) umfasst,
wobei das Freizeitfahrzeug **dadurch gekennzeichnet ist, dass** der Gepäckraum (18) und der Fahrgastraumbereich (19) durch eine Aufbewahrungsbox (20) vertikal voneinander getrennt sind, und dadurch, dass es Antriebsmittel (30, 31a, 31b, 66) zum vertikalen Verschieben der Aufbewahrungsbox (20) in Bezug auf die Rückwand (13) zwischen einer oberen Position und einer unteren Position umfasst, um ein im Inneren des Gepäckraums (18) verfügbares Volumen zu verändern.

2. Freizeitfahrzeug nach Anspruch 1, wobei die Antriebsmittel (30, 31a, 31b, 66) Folgendes umfassen:
- eine Antriebswelle (30), die an einer horizontalen Bodenwand (21) der Aufbewahrungsbox (20) innerhalb des Gepäckraums (18) zur Drehung um eine horizontale Drehachse (32) in einer ersten und einer zweiten Drehrichtung montiert ist,
- mehrere Gurte (31a, 31b), Kabel oder Ketten, die mit einem ersten Ende an der Antriebswelle (30) und mit einem zweiten Ende an einer der Wände (14, 15) des Freizeitfahrzeugs (10) befestigt sind, um die Aufbewahrungsbox (20) an der Wand bzw. an den Wänden (14, 15) des Freizeitfahrzeugs (10) aufzuhängen, wenn sich die Aufbewahrungsbox (20) in der oberen oder unteren Position befindet,
wobei sich die Gurte (31a, 31b), Kabel oder Ketten um die Antriebswelle (30) auf- bzw. abwickeln, wenn sich die Antriebswelle (30) in der ersten Drehrichtung bzw. in der zweiten Drehrichtung um die Drehachse (32) dreht, um die Aufbewahrungsbox (20) in ihre obere Position bzw. in ihre untere Position vertikal zu verschieben.

3. Freizeitfahrzeug nach Anspruch 2, umfassend vertikale Seitenwände (13, 14), die sich senkrecht zur Rückwand (13) und auf beiden Seiten derselben erstrecken, und wobei:
- die Drehachse (32) der Antriebswelle (30) parallel zu den Seitenwänden (13, 14) ausgerichtet ist,
- das zweite Ende der Gurte (31a, 31b), Kabel oder Ketten an den Seitenwänden (14, 15) des Freizeitfahrzeugs (10) im Bereich von Befestigungszonen befestigt sind, die sich oberhalb von unteren Kanten (35, 36) der Bodenwand (21) der Aufbewahrungsbox (20) befinden, wenn sich die Aufbewahrungsbox (20) in der unteren Position und in der oberen Position befindet.

4. Freizeitfahrzeug (10) nach Anspruch 3, wobei der hintere Innenraum (17) eine vertikale und zur Rückwand (13) senkrechte Abdeckplatte (52, 53) umfasst, die an jeder der Befestigungszonen der Seitenwände (14, 15) des Freizeitfahrzeugs (10) angebracht und befestigt ist.

5. Freizeitfahrzeug (10) nach Anspruch 4, wobei die Aufbewahrungsbox (20) vertikale Seitenwände (24, 25) umfasst, die sich parallel zu den Seitenwänden (14, 15) des Freizeitfahrzeugs (10) und auf beiden Seiten der Bodenwand (21) der Aufbewahrungsbox (20) erstrecken, wobei sich eine obere Kante (60, 61) jeder der Seitenwände (24, 25) der Aufbewahrungsbox (20) höher als oder auf derselben Höhe wie eine untere Kante (62, 63) der angrenzenden Abdeckplatte (52, 53) befindet, wenn sich die Aufbewahrungsbox (20) in der unteren Position befindet.

6. Freizeitfahrzeug nach Anspruch 5, wobei sich die Seitenwände (24, 25) der Aufbewahrungsbox (20) im Fahrgastraumbereich (19) über eine der Bodenwand (21) gegenüberliegende horizontale obere Wand (22) der Aufbewahrungsbox (20) hinaus vertikal nach oben erstrecken.

7. Freizeitfahrzeug nach einem der vorangehenden Ansprüche, wobei eine obere Wand (22) der Aufbewahrungsbox (20) zumindest eine Zugangsöffnung (27) zu einem Stauraum umfasst.

8. Freizeitfahrzeug nach Anspruch 7, wobei die obere Wand (22) der Aufbewahrungsbox (20) zumindest eine an der oberen Wand (22) angelenkte Klappe (28) umfasst.

9. Freizeitfahrzeug nach einem der vorangehenden Ansprüche, wobei ein Abschnitt der oberen Wand der Aufbewahrungsbox (20) ein einfaches oder doppeltes Waschbecken trägt.

10. Freizeitfahrzeug nach einem der vorangehenden Ansprüche, wobei auf der oberen Wand (22) der Aufbewahrungsbox (20) eine Matratze angeordnet ist.

11. Freizeitfahrzeug nach einem der Ansprüche 1 bis 10, umfassend:
- zumindest ein horizontales Heckbett (67), das oberhalb der Aufbewahrungsbox (20) angeordnet und zumindest teilweise im Fahrgastraumbereich (19) untergebracht ist,
- Antriebsmittel (68, 69a, 69b, 70) zum vertikalen Verschieben des Heckbetts bzw. der Heckbetten (67) zwischen einer als eingefahrene Position bezeichneten oberen Position und einer als ausgefahrene Position bezeichneten unteren Position, in der das Heckbett bzw. die Heckbetten (67) zumindest teilweise auf einer horizontalen oberen Wand (22) der Aufbewahrungsbox (20) aufliegen.

12. Fahrzeug nach Anspruch 11 in Kombination mit Anspruch 3, **dadurch gekennzeichnet, dass** das zumindest eine Heckbett (67) ein einzelnes Heckbett ist, das eine Längserstreckungsachse aufweist und das in Bezug auf die Seitenwände (14, 15) des Freizeitfahrzeugs (10) zentriert ist.

13. Freizeitfahrzeug nach Anspruch 11, wobei der hintere Innenraum (17) Mittel (75, 76) zur Führung der vertikalen Verschiebung der Aufbewahrungsbox (20) zwischen ihrer oberen und ihrer unteren Position und des Heckbetts bzw. eines der Heckbetten (67) zwischen seiner eingefahrenen und seiner ausgefahrenen Position umfasst.

14. Freizeitfahrzeug (10) nach Anspruch 13, wobei die Führungsmittel (75, 76) zumindest eine Führungsbaugruppe umfassen, die Folgendes umfasst:
- eine am Freizeitfahrzeug (10) montierte gemeinsame vertikale Führungsschiene (75),
- ein Paar Führungsschuhe (76), die dazu ausgelegt sind, entlang der gemeinsamen Führungsschiene (75) zu gleiten oder zu rollen, wobei ein als unterer Führungsschuh bezeichneter erster Führungsschuh (76) von der Aufbewahrungsbox (20) getragen wird und ein als oberer Führungsschuh bezeichneter zweiter Führungsschuh (76) von dem bzw. den Heckbett (en) (67) getragen wird.

15. Freizeitfahrzeug nach einem der Ansprüche 1 bis 14, ferner umfassend einen Wohninnenraum (77), der vom hinteren Innenraum (17) durch eine vertikale und zur Rückwand (13) parallele Trennwand (82) getrennt ist, wobei sich eine obere Kante (83) der Trennwand (82) höher als oder auf derselben Höhe wie eine untere Kante (84) einer vertikalen Vorderwand (23) der Aufbewahrungsbox (20) befindet, wenn sich die Aufbewahrungsbox (20) in der oberen Position befindet, wobei die Vorderwand (23) parallel zur Trennwand (82) und dieser zugewandt angeordnet ist.

16. Freizeitfahrzeug nach Anspruch 15, wobei sich die Vorderwand (23) der Aufbewahrungsbox (20) im Gepäckraum (18) über eine horizontale Bodenwand (21) der Aufbewahrungsbox (20) hinaus vertikal nach unten erstreckt.

## Claims

1. Recreational vehicle (10) extending from back to front in a longitudinal direction (L) and from bottom to top in a vertical direction (V), comprising:
- a vertical rear wall (13), and
- a rear interior space (17) delimited by the rear wall (13) and comprising a luggage compartment (18) and a vehicle interior area (19) arranged above the luggage compartment (18),
the recreational vehicle being **characterized in that** the luggage compartment (18) and the vehicle interior area (19) are separated vertically from one another by a storage box (20), and **in that** it comprises means (30, 31a, 31b, 66) for driving the storage box (20) in vertical translation relative to the rear wall (13) between a high position and a low position, so as to vary an available volume inside the luggage compartment (18).

2. Recreational vehicle according to Claim 1, wherein the driving means (30, 31a, 31b, 66) comprise:
- a driving shaft (30) which is mounted on a horizontal bottom wall (21) of the storage box (20), inside the luggage compartment (18), to rotate about a horizontal axis of rotation (32) in opposing first and second directions of rotation,
- a plurality of straps (31a, 31b), cables or chains fixed by a first end to the driving shaft (30) and by a second end to one of the walls (14, 15) of the recreational vehicle (10), so as to suspend the storage box (20) from the wall or walls (14, 15) of the recreational vehicle (10), when the storage box (20) is in high position or in low position,
the straps (31a, 31b), cables or chains being wound or unwound around the driving shaft (30), respectively when the driving shaft (30) rotates about the axis of rotation (32) in the first direction of rotation or in the second direction of rotation, so as to drive the storage box (20) in vertical translation to its high position or to its low position.

3. Recreational vehicle according to Claim 2, comprising vertical lateral walls (13, 14) extending at right angles and on either side of the rear wall (13), and in which:
- the axis of rotation (32) of the driving shaft (30) is oriented parallel to the lateral walls (13, 14),
- the second end of the straps (31a, 31b), cables or chains is fixed to the lateral walls (14, 15) of the recreational vehicle (10) at fixing zones situated above bottom edges (35, 36) of the bottom wall (21) of the storage box (20), when the storage box (20) is in the low position and in the high position.

4. Recreational vehicle (10) according to Claim 3, wherein the rear interior space (17) includes a covering plate (52, 53), vertical and at right angles to the rear wall (13), added and fixed onto each of the fixing zones of the lateral walls (14, 15) of the recreational vehicle (10).

5. Recreational vehicle (10) according to Claim 4, wherein the storage box (20) comprises vertical lateral walls (24, 25) extending parallel to the lateral walls (14, 15) of the recreational vehicle (10) and on either side of the bottom wall (21) of the storage box (20), a top edge (60, 61) of each of the lateral walls (24, 25) of the storage box (20) being situated higher than or at the same height as a bottom edge (62, 63) of the adjacent covering plate (52, 53), when the storage box (20) is in low position.

6. Recreational vehicle according to Claim 5, wherein the lateral walls (24, 25) of the storage box (20) extend vertically upward, in the vehicle interior area (19), beyond a horizontal top wall (22) of the storage box (20), opposite the bottom wall (21) .

7. Recreational vehicle according to any one of the preceding claims, wherein a top wall (22) of the storage box (20) comprises at least one access opening (27) to a storage space.

8. Recreational vehicle according to Claim 7, wherein the top wall (22) of the storage box (20) comprises at least one hatch (28) hinged on the top wall (22).

9. Recreational vehicle according to any one of the preceding claims, wherein a portion of the top wall of the storage box (20) bears one single or double wash bowl.

10. Recreational vehicle according to any one of the preceding claims, wherein a mattress is placed on a top wall (22) of the storage box (20).

11. Recreational vehicle according to one of Claims 1 to 10, comprising:
- at least one horizontal rear bed (67) arranged above the storage box (20) and housed at least partly in the vehicle interior area (19),
- means (68, 69a, 69b, 70) for driving the rear bed or beds (67) in vertical translation between a high position, called retracted position, and a low position, called deployed position, in which the rear bed or beds (67) are at least partly bearing on a horizontal top wall (22) of the storage box (20).

12. Vehicle according to Claim 11 taken in combination with Claim 3, **characterized in that** said at least one rear bed (67) is a single rear bed having a longitudinal axis of extension and which is centred relative to the lateral walls (14, 15) of the recreational vehicle (10).

13. Recreational vehicle according to Claim 11, wherein the rear interior space (17) comprises means (75, 76) for guiding the vertical translation of the storage box (20) between its high and low positions and the or one of the rear beds (67) between its retracted and deployed positions.

14. Recreational vehicle (10) according to Claim 13, wherein the guiding means (75, 76) comprise at least one guiding assembly comprising:
- a common vertical guiding rail (75) mounted on the recreational vehicle (10),
- a pair of guiding runners (76) designed to slide or roll along the common guiding rail (75), a first guiding runner (76), called bottom guiding runner, being borne by the storage box (20), a second guiding runner (76), called top guiding runner, being borne by the or one of the rear beds (67).

15. Recreational vehicle according to one of Claims 1 to 14, further comprising an interior living space (77) separated from the rear interior space (17) by a separating wall (82), vertical and parallel to the rear wall (13), a top edge (83) of the separating wall (82) being situated higher than or at the same height as a bottom edge (84) of a vertical front wall (23) of the storage box (20), when the storage box (20) is in the high position, the front wall (23) being arranged parallel to and facing the separating wall (82).

16. Recreational vehicle according to Claim 15, wherein the front wall (23) of the storage box (20) extends vertically downwards, in the luggage compartment (18), beyond a horizontal bottom wall (21) of the storage box (20).
